# EUROPEAN PATENT APPLICATION

(11) **EP 3 657 636 A1**
(43) Date of publication of application: **27.05.2020**
(21) Application number: 18382852.4
(22) Date of filing: 26.11.2018
(51) Int. Cl.: H02K 1/26, H02K 1/28, H02K 1/30

(54) **REINFORCEMENT MEANS**

(71) Applicant: ABB Schweiz AG, 5400 Baden (CH)
(72) Inventor: Betolaza Garcia, Jose-Felix, 48530 ORTUELLA (ES); Liu, Wenli, 5242 BIRR (CH)
(74) Representative: ABB SE-IP

(57) **Abstract**

This invention relates to a ring motor mill comprising a mill body, wherein the mill body comprises an inner and outer shell, wherein the outer shell comprises a flange extending circumferentially around the outer shell; a ring motor comprising a stator and a rotor; wherein the rotor comprises a plurality of rotor poles mounted on the flange; wherein the stator is mounted around the rotor poles; wherein at least two adjacent rotor poles are coupled together with a reinforcement member.

## Description

### FIELD OF THE INVENTION

This invention relates to reinforcement means for rotor poles in a gearless mill.

### BACKGROUND

Gearless mills are typically driven by a direct drive ring motor around an outer shell of a mill body. The ring motor is generally comprised of a mill body with a flange to which a plurality of rotor poles of the ring motor are directly attached. As the rotor poles are mounted directly onto the mill body, the mill itself becomes the rotor of the ring motor. Each rotor pole is individually exchangeable. A stator ring motor is mounted around the rotor poles leaving an air gap between the rotor and the motor. A driving torque is transmitted via a magnetic field from the motor to the mill body. The transfer of torque from pole to mill flange is only by friction and not by sheer force of the pole bolt. The friction generated by the torque is sufficient for normal operation of the ring motor.

In the ring motor, each rotor pole unit comprises a center plate and pole bolts. Each rotor pole is fixed directly to the flange on the mill body with at least three pretensioned bolts. The outer bolts holding the rotor poles in place are generally equipped with eccentric bushing to allow air gap adjustment. In addition, the bolts are individually exchangeable.

Each of the rotor poles is subject to torque and the pole plates act as a cantilever beam. This results in a large amount of stress in the areas around the pole fixation due to the pretension in the bolts and the torque on the pole plates.

There is therefore a need to reduce the amount of stress on the poles, particularly for existing ring motors as well as ring motors with more demanding power or power/size ratios.

### SUMMARY OF THE INVENTION

According to a first aspect of the invention, there is provided a ring motor mill comprising one or more of the following:
a mill body, wherein the mill body may comprise an inner and outer shell, wherein the outer shell may comprise a flange extending circumferentially around the outer shell;
a ring motor which may comprise a stator and a rotor,
wherein the rotor may comprise a plurality of rotor poles mounted on the flange;
wherein the stator may be mounted around the rotor poles;
wherein at least two adjacent rotor poles may be coupled together with a reinforcement member.

In a second aspect, the invention provides a rotor pole assembly comprising one or more of the following: at least one rotor pole which may comprise a center plate; at least one reinforcement member; and fastening means for fastening the reinforcement means to the center plate.

In a third aspect, the invention provides a method of reinforcing the rotor poles of a ring motor, the method may comprise the step of fitting a reinforcement member according to any preceding claim onto adjacent rotor poles with a fastening means.

### BRIEF DESCRIPTION OF THE DRAWINGS

These and other aspects of the invention will now be further described, by way of example only, with reference to the accompanying figures in which:

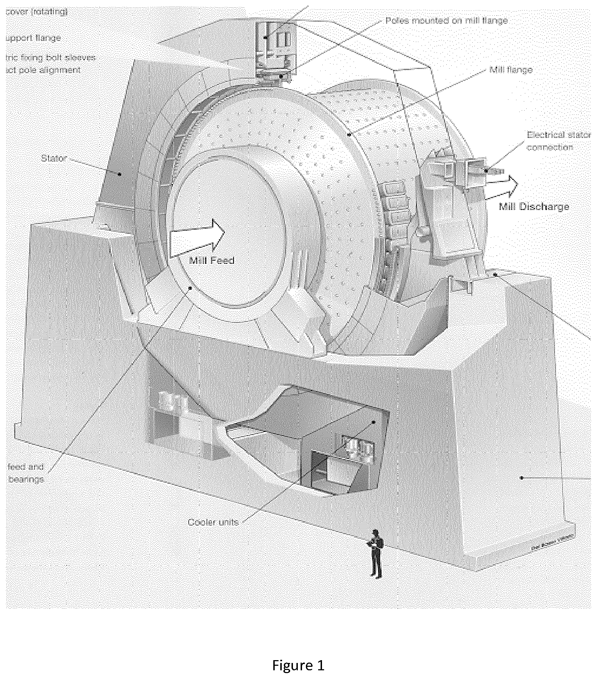

Figure 1 shows a gearless mill drive.

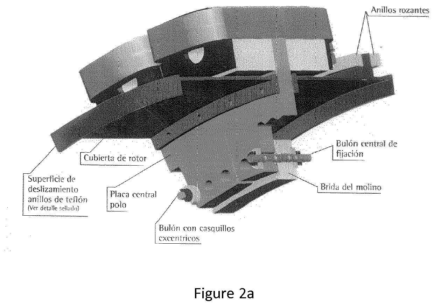

Figure 2a shows a cross section of the rotor poles.

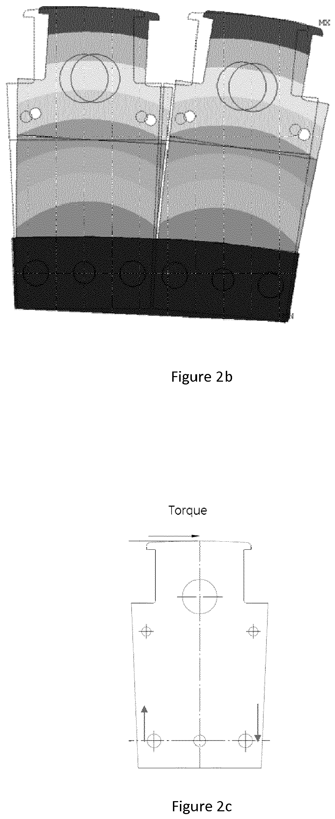

Figures 2b and 2c show the forces on two adjacent rotor poles.

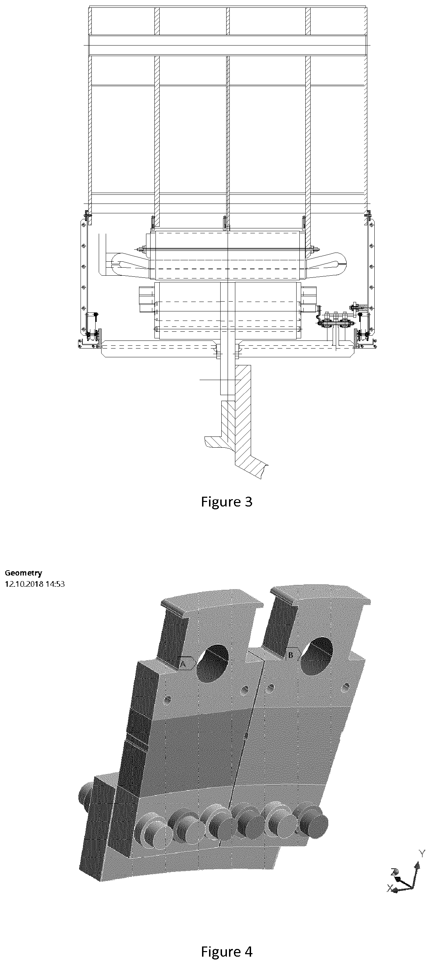

Figure 3 is a cross section of a rotor pole.
Figure 4 shows two adjacent rotor poles attached to a section of the flange of the outer shell of the mill.

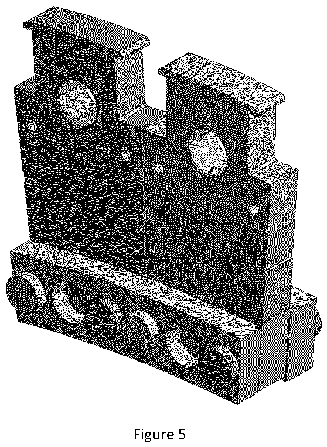

Figure 5 shows a perspective view of a connector assembly according to the present invention.

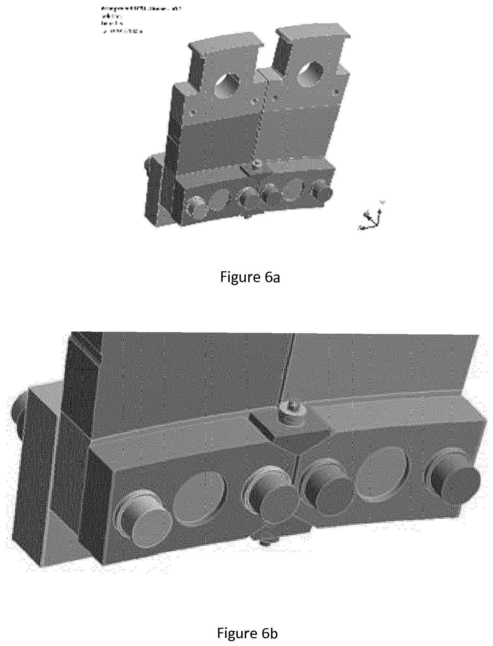

Figures 6a shows a perspective view of a connector assembly according to the present invention.
Figure 6b shows an enlargement of the connector assembly according to the present invention.

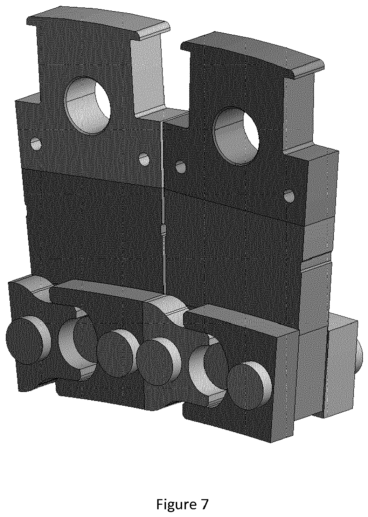

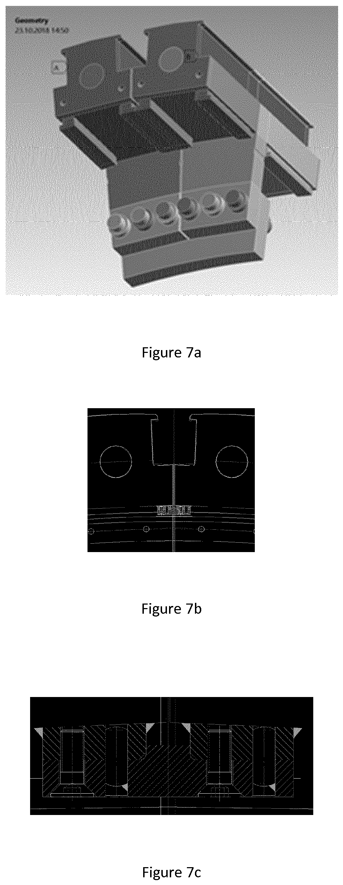

Figures 7a, 7b and 7c show perspective views of a connector assembly according to the present invention.

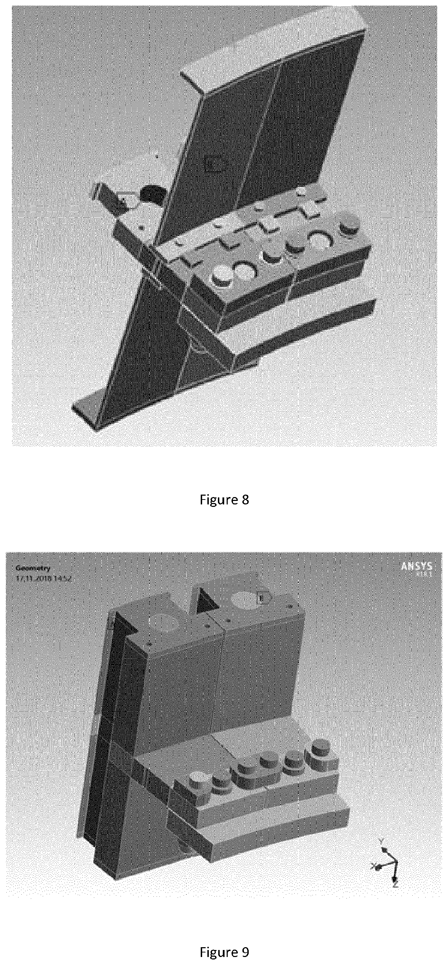

Figure 8 shows a perspective view of a connector assembly according to the present invention.
Figure 9 shows a perspective view of a connector assembly according to the present invention.

### DETAILED DESCRIPTION

The invention provides a ring motor mill comprising a mill body, wherein the mill body comprises an inner and outer shell, wherein the outer shell comprises a flange extending circumferentially around the outer shell; a ring motor comprising a stator and a rotor, wherein the rotor comprises a plurality of rotor poles mounted on the flange; wherein the stator is mounted around the rotor poles; wherein at least two adjacent rotor poles are coupled together with a reinforcement member.

The invention also provides for a rotor pole assembly comprising: at least one rotor pole comprising a center plate; at least one reinforcement member; and fastening means for fastening the reinforcement means to the center plate.

In one embodiment, the reinforcement member may span across two adjacent poles.

The reinforcement member may comprise a plate. The plate may cover a surface on two adjacent poles. Alternatively, the plate may cover a minimum amount of surface to hold two adjacent poles together. Alternatively, the plate may cover a single pole.

The reinforcement member may be fixed to the rotor poles using fastening means. The fastening means may comprise at least three bolts. The bolts may extend through the reinforcement member, the rotor pole and the flange. The bolts may be aligned, for example in a row. The bolt arrangement may comprise a central bolt and a bolt positioned to each side of the central bolt (i.e. outer bolts). The reinforcement member may be fastened to the adjacent rotor poles with at least one outer bolts of each rotor pole. The reinforcement member may be fastened to the adjacent rotor poles with two outer bolts of each rotor pole. The central bolt may be retained to keep the pole fixed in place on the flange during installation of the plate. Alternatively, the plate may be fixed using adjacent bolts on adjacent rotor poles. The reinforcement member spanning adjacent poles allows the redistribution of stress on the rotor poles due to the torque. This is because it allows a partial ring effect and reduces the pretension specific pressure.

The reinforcement member may be fastened to the rotor poles outside the motor and therefore can this can be completed during scheduled maintenance stops and does not require additional downtime for installation. This prevents a loss in profits due to additional inactivity of the mill. In addition, installment of the reinforcement member does not require readjustment of the poles. Also, with such reinforcement members, it is still possible to exchange individual rotor poles, if needed. The ring motor fitted with said reinforcement members also have increased mechanical safety margin.

Adjacent reinforcement members may be linked together by a connecting means. The connecting means may have faces reciprocal to the ends of the reinforcement members. The faces may be angular. The connecting means may be fixed to the reinforcement members by pretensioned radial bolts. In this embodiment, the reinforcement member may span across two adjacent poles. Alternatively, the reinforcement member may cover a single rotor pole. The ring motor may comprise a combination of single and double reinforcement members linked together by a connecting means. The connecting means allows a simulation of the full ring effect.

In one embodiment, the reinforcement members comprise inter-engaging and/or interlocking plates. The plates may be chain-like plates. This allows a full ring effect to be simulated.

In one embodiment, the reinforcement member may comprise a screwed assembly welded onto the rotor pole laminations. This reinforcement member arrangement has a high efficiency in reducing stress. This arrangement does not require readjustment of the rotor poles. It also allows for the possibility of exchanging individual poles. However, to install this reinforcement member arrangement, it is necessary to remove the rotor cover to access the pole laminations.

In one embodiment, the reinforcement member comprises at least two stop blocks welded on a rotor poles wherein the stop blocks are positioned to support the rotor cover. In addition, the rotor covers are fastened to the rotor with pins. This reinforcement arrangement can be combined with any of the other reinforcement plates disclosed herein. With this arrangement, it is not necessary to readjust the rotor poles. In addition, individual rotor poles may be exchanged, if required.

Any of the embodiments described herein may be used in combination *mutatis mutandis.*

Embodiments of the invention have been described by way of example only. It will be appreciated that variations of the described embodiments may be made which are still within the scope of the invention.

## Claims

1. A ring motor mill comprising:
a mill body, wherein the mill body comprises an inner and outer shell, wherein the outer shell comprises a flange extending circumferentially around the outer shell;
a ring motor comprising a stator and a rotor;
wherein the rotor comprises a plurality of rotor poles mounted on the flange;
wherein the stator is mounted around the rotor poles;
wherein at least two adjacent rotor poles are coupled together with a reinforcement member.

2. A rotor pole assembly comprising:
at least one rotor pole comprising a center plate;
at least one reinforcement member; and
fastening means for fastening the reinforcement means to the center plate.

3. The rotor pole assembly of claim 2, wherein the assembly comprises at least two rotor poles.

4. The ring motor mill of claim 1 or the rotor pole assembly of claims 2 or 3, wherein the reinforcement member is fastened to the adjacent rotor poles with a fastening means.

5. The ring motor mill or the rotor pole assembly of any preceding claim, wherein the fastening means comprises at least one bolt.

6. The ring motor mill or the rotor pole assembly of any preceding claim, wherein the reinforcement member comprises a plate spanning over at least two adjacent rotor poles.

7. The ring motor mill or the rotor pole assembly of any preceding claim, wherein the reinforcement member comprises inter-engaging plates.

8. The ring motor mill or the rotor pole assembly of any preceding claim, comprising a plurality of reinforcement members.

9. The ring motor mill or the rotor pole assembly of any preceding claim, wherein adjacent reinforcement members are joined together with a connecting means.

10. The ring motor mill of claim 9, wherein the connecting means comprise angular faces reciprocal to the ends of the reinforcement members.

11. The ring motor mill of any one of claims 9 to 10, wherein connecting means comprise pretensioned radial bolts.

12. The ring motor mill or the rotor pole assembly of any preceding claim, wherein the reinforcement members are welded to the rotor pole lamination

13. A method of reinforcing the rotor poles of a ring motor, the method comprising the step of fitting a reinforcement member according to any preceding claim onto adjacent rotor poles with a fastening means.
